# FASCICULE DE BREVET EUROPEEN

(11) **EP 1 173 748 B1**
(45) Date de publication et mention de la délivrance du brevet: **08.10.2003**
(21) Numéro de dépôt: 00922722.4
(22) Date de dépôt: 21.04.2000
(51) Int. Cl.: G01N 21/51, G01N 21/31

(54) **PROCEDE ET DISPOSITIF POUR LA DETECTION DE VARIATIONS DE PROPRIETES OPTIQUES D'UN ECHANTILLON DANS UN PROCESSUS D'ANALYSE**
VERFAHREN UND VORRICHTUNG ZUR DETEKTION DER VERÄNDERUNG OPTISCHER EIGENSCHAFTEN EINER PROBE IN EINEM ANALYSEPROZESS
METHOD AND DEVICE FOR DETECTING VARIATIONS OF OPTICAL PROPERTIES IN A SAMPLE IN AN ANALYSIS PROCESS

(30) Priorité: 23.04.1999 FR 9905226
(43) Date de publication de la demande: 23.01.2002
(73) Titulaire: Stago International, 92600 Asnières (FR)
(72) Inventeur: ABOU-SALEH, Khaled, F-92400 Courbevoie (FR); FERE, Patrick, F-75004 Paris (FR); ROUSSEAU, Alain, F-75004 Paris (FR)
(74) Mandataire: de Saint-Palais, Arnaud Marie
(86) Numéro de dépôt international: FR0001070
(87) Numéro de publication internationale: WO00065332

(56) Documents cités:
- EP-A- 0 303 132
- EP-A- 0 635 570
- EP-A- 0 706 043
- WO-A-81/02633
- US-A- 5 013 155
- US-A- 5 489 977

## Description

La présente invention concerne un procédé et un dispositif pour la détection de variations de propriétés optiques d'un échantillon, telles que, par exemple, une variation colorimétrique obtenue au cours d'un processus d'analyse chimique et/ou biologique.

Elle s'applique notamment à la détection de la présence ou de l'absence de micro-organismes tels que des bactéries ou des levures dans un échantillon d'un matériau biologique.

Elle convient tout particulièrement, mais non exclusivement, à une détection de ce type dans un processus d'analyse biologique tel que décrit dans la demande WO 96/29427 comportant une phase de séparation "sur gel" consistant à :
- introduire un échantillon dans un tube de centrifugation, au-dessus d'un système gélifié préalablement introduit dans le tube, ce système étant conçu de manière à séparer les micro-organismes présents dans l'échantillon en fonction de leur taille et comprenant un milieu de culture propice au développement des micro-organismes et un réactif apte à induire une variation de mesure optique détectable ;
- centrifuger le contenu du tube de manière à provoquer la migration des micro-organismes présents dans l'échantillon, dans le système gélifié et y promouvoir leur développement ;
- révéler la présence ou l'absence des micro-organismes dans ledit système par une détection de la susdite variation de mesure optique.

Jusqu'ici, cette détection s'effectuait visuellement et comportait donc tous les inconvénients de ce type de détection.

L'invention s'applique également dans d'autres domaines, dont notamment celui de l'hémostase. Elle peut ainsi être utilisée dans un procédé pour mesurer le temps de coagulation du sang tel que décrit dans le brevet US 4 918 984 déposé au nom de la Société Serbio, qui comporte une mesure densitométrique couplée à une détermination du temps de coagulation d'un échantillon de plasma sanguin. Dans cet exemple, ces deux mesures sont obtenues au moyen d'un dispositif comprenant, de part et d'autre d'un récipient transparent l'échantillon, d'une part, un dispositif déclairage et, d'autre part, un photodétecteur devant lequel est placé un filtre optique passe-bande, ce photodétecteur étant connecté à un circuit électronique de traitement.

Ultérieurement, en vue d'améliorer ce dispositif, on a en outre prévu :
- d'une part, un dispositif de filtrage comprenant plusieurs filtres lumineux mobiles pouvant être amenés successivement dans le trajet du faisceau lumineux émis par la lampe à incandescence (dispositif d'éclairage), et
- d'autre part, un circuit d'échantillonnage apte à prélever des échantillons du signal de mesure délivré par le photodétecteur, en synchronisme avec le défilement des filtres et à associer à chaque échantillon un identifiant correspondant au filtre utilisé lors de l'échantillonnage.

En théorie, cette solution est susceptible de permettre de suivre en temps réel les variations du faisceau détecté pour chacune des plages de longueurs d'onde des filtres.

En réalité, elle ne permet pas d'obtenir des résultats satisfaisants principalement en raison de la période de défilement des filtres qui demeure relativement importante (sans qu'il soit envisageable de la réduire) et qui conduit à un échantillonnage à une périodicité de l'ordre de 2 s. Il est clair que compte tenu de cette périodicité et du décalage temporel des signaux détectés, les comparaisons effectuées entre ces signaux deviennent douteuses et, de toute façon, l'erreur sur la localisation du virage demeure relativement importante. En outre, en raison de la partie électromécanique qu'elle fait intervenir, cette solution est relativement coûteuse et nécessite une maintenance relativement lourde.

L'invention a donc également pour but de résoudre ces problèmes de lenteur, maintenance et mécanique lourde.

Par ailleurs, le brevet US A 5 489 977 propose un procédé consistant à exécuter, au cours d'une période de temps relativement courte deux expositions successives de l'échantillon sous la même incidence mais avec des impulsions lumineuses comprises dans deux gammes de fréquence différentes, la mesure et l'analyse des intensités du rayon lumineux transmis après son passage dans l'échantillon.

Toutefois, les informations recueillies ne permettent pas de déterminer d'une façon suffisamment précise et sans risque de faux négatif un virage de l'échantillon.

Il en est de même dans la station de mesure décrite dans le brevet EP-A-0 635 570 qui détecte l'intensité de rayonnement lumineux en provenance de deux sources de lumière distincte.

L'invention a donc en outre pour but de supprimer ces inconvénients.

Elle propose donc un procédé de détection de type statique et sans maintenance consistant à exécuter, au cours d'une période de temps relativement courte, de l'ordre de la milliseconde à la dizaine de millisecondes, une séquence opératoire comprenant les étapes suivantes :
- une première exposition de l'échantillon à une première impulsion lumineuse incidente dont les ondes lumineuses sont comprises dans une première gamme de fréquence, cette impulsion étant émise par une première source lumineuse optoélectronique,
- une première mesure de type turbidimétrique par un premier détecteur optoélectronique situé sensiblement dans l'axe de ladite impulsion incidente de l'intensité lumineuse transmise de ladite impulsion, après son passage au travers dudit échantillon,
- le stockage du résultat de cette première mesure dans une mémoire,
- une deuxième exposition de l'échantillon à une seconde impulsion lumineuse incidente présentant sensiblement la même incidence que la première, dont les ondes lumineuses sont comprises dans une deuxième gamme de fréquence, cette impulsion étant émise par une seconde source lumineuse optoélectronique,
- une seconde mesure de type turbidimétrique par ledit premier détecteur de l'intensité lumineuse de ladite seconde impulsion après son passage au travers dudit échantillon,
- le stockage, dans ladite mémoire, du résultat de cette seconde mesure.

Selon l'invention, ce procédé est caractérisé en ce qu'il comprend en outre dans ladite période de temps
- une troisième exposition de l'échantillon à une troisième impulsion lumineuse (IL₃) orientée perpendiculairement aux deux autres impulsions,
- une troisième mesure de type néphélométrique de l'intensité lumineuse du rayonnement émis par l'échantillon en réponse à cette troisième impulsion, à l'aide dudit détecteur (DO),
- le stockage en mémoire des résultats de cette troisième mesure dans ladite mémoire, et
une analyse des résultats stockés dans ladite mémoire étant effectuée pendant ou après ladite période de temps.

Avantageusement, la durée des susdites impulsions lumineuses pourra aller d'un dixième de milliseconde à quelques millisecondes.

Avantageusement, le susdit détecteur sera de type spectrophotométrique de manière à pouvoir effectuer une mesure de la fluorescence de l'échantillon.

Cette mesure de fluorescence pourra être en outre conjuguée avec une analyse de type néphélométrique prenant en compte les propriétés de diffusion optique de l'échantillon.

Ainsi, dans le cas de la détection de la présence de bactéries, il devient possible de réaliser une table de vérité permettant d'exploiter les variations de propriété optique de l'échantillon mesurées par les détecteurs et d'en déduire une indication sur l'importance des populations de bactéries, étant entendu que :
- un nombre peu élevé de bactéries se traduit par une fluorescence,
- une augmentation des bactéries engendre une diminution de la fluorescence, l'échantillon devenant transparent,
- un nombre élevé de bactéries engendre un état non transparent, non fluorescent décelable par la mesure néphélométrique.

Grâce à ces dispositions, les différentes mesures qui sont pratiquement simultanées (période de mesure très courte) sont effectuées dans les mêmes conditions, et donc sont très sûres. En outre, l'interprétation des résultats de mesure est beaucoup moins aléatoire et l'on n'a plus à redouter de faux négatifs.

Un mode d'exécution d'un dispositif pour la mise en oeuvre du procédé selon l'invention sera décrit ci-après, à titre d'exemple non limitatif, avec référence aux dessins annexés dans lesquels :
La figure 1 est une représentation schématique illustrant le principe d'un dispositif de détection des variations de propriétés optiques d'un échantillon en présence d'un réactif ;
La figure 2 est une représentation schématique du détecteur spectrophotométrique utilisé dans le dispositif de la figure 1 ;
La figure 3 est un diagramme illustrant le principe d'une détection simplifiée de la fluorescence de l'échantillon ;
La figure 4 est un diagramme temporel d'une séquence de mesure réalisée dans une période de mesure par le dispositif de la figure 1 ;
La figure 5 est une table de vérité utilisée pour exploiter les résultats des mesures effectuées par le dispositif ;
La figure 6 est une représentation schématique d'un appareil d'analyse automatique utilisant un dispositif de détection selon l'invention pour effectuer des analyses biochimiques en hémostase.
Les figures 7 et 8 sont des courbes représentatives des valeurs détectées par un appareil de lecture selon l'invention dans le cas de tubes SCREEN GEL® Uri (fig. 7) et de tubes SCREEN GEL® mycobact (fig. 8).

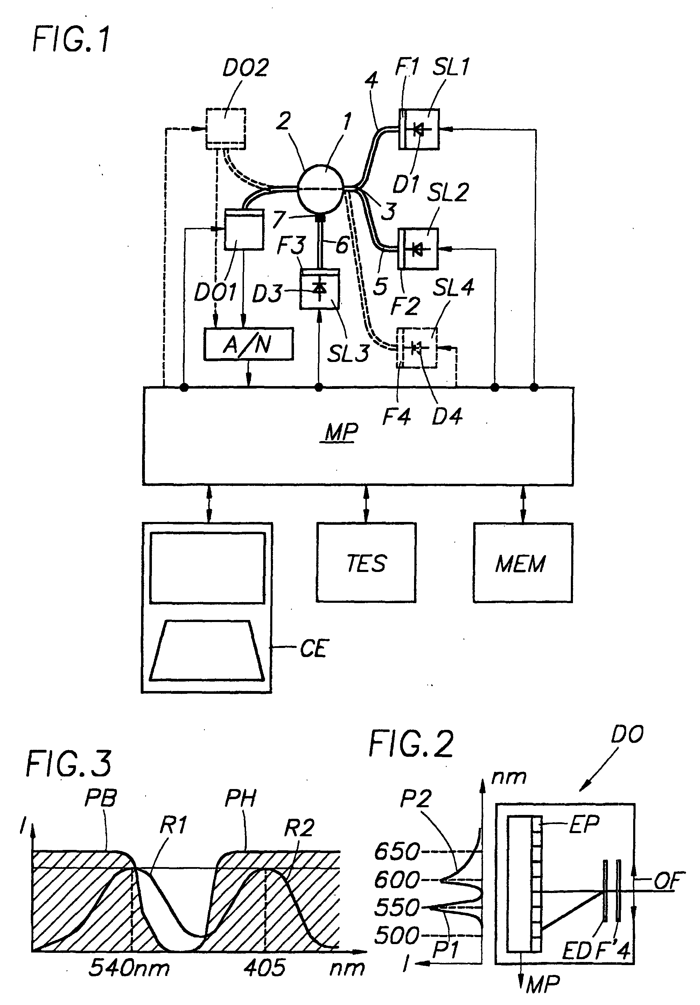

Dans l'exemple illustré sur les figures 1 à 4, l'échantillon 1 que l'on désire analyser est contenu dans un récipient transparent 2, par exemple un tube à essai, axé perpendiculairement à l'axe d'un montage optique comprenant un système d'émission d'un faisceau lumineux incident comprenant, d'une part, au moins deux sources lumineuses SL₁, SL₂ reliées à une tête d'émission 3 située au voisinage du tube 2, par l'intermédiaire de deux guides optiques respectifs 4, 5 constitués chacun par une fibre optique et, d'autre part, une troisième source lumineuse SL₃ reliée par un guide optique 6 à une tête d'émission 7 axée perpendiculairement à l'axe de la tête 3. Au moins une source lumineuse SL₄ supplémentaire, représentée en traits interrompus, pourra être reliée à la tête d'émission 3 par l'intermédiaire d'un guide d'onde correspondant.

Les sources lumineuses SL₁, SL₂, SL₄ sont constituées par des diodes électroluminescentes dont le rayonnement lumineux est filtré par des filtres F₁, F₂, F₄ respectivement rouge (entre 600 nm et 700 nm) pour la source SL₁ et vert (entre 550 nm et 650 nm) pour la source SL₂. De même, la source SL₃ comprend une diode D₃ et un filtre rouge F₃.

Les diodes D₁ à D₄ sont pilotées par un microprocesseur MP de manière à émettre des impulsions lumineuses successives par exemple de 2 ms, au cours d'une période de mesure, par exemple de 10 ms.

Le dispositif comprend par ailleurs au moins un circuit de détection DO, ici deux circuits DO₁, DO₂ reliés à une tête de réception 3' par deux fibres respectives disposées dans l'axe de la tête d'émission 3, du côté du tube 2 situé à l'opposé de ladite tête 3.

Les détecteurs DO₁, DO₂ comprenant chacun une photodiode associée à un filtre sont pilotés par le microprocesseur de manière à prélever des échantillons de mesure pendant la période d'émission des diodes D₁ à D₄ et de leur attribuer un identifiant.

Les signaux de mesure produits par les détecteurs DO₁, DO₂ sont numérisés par l'intermédiaire d'un convertisseur analogique/numérique A/N avant d'être appliqués au microprocesseur MP.

Bien entendu, le microprocesseur MP est associé à des périphériques tels que, par exemple, une console clavier/écran CE, un terminal d'entrée/sortie TES par exemple de type RS232, et une unité de mémoire MEM.

Dans l'exemple représenté sur la figure 2, le détecteur DO qui peut se substituer aux détecteurs DO₁, DO₂ est de type spectrophotométrique. Il se compose d'un objectif OF qui permet de projeter à l'infini le faisceau lumineux produit par la tête 3 ou obtenu par diffusion de la lumière produite par la tête 7 sur un élément dispersif ED tel qu'un prisme ou un réseau par l'intermédiaire d'un filtre F'₄.

La lumière dispersée par l'élément ED est alors détectée par une barrette d'éléments photosensibles EP, par exemple une barrette de type CCD pilotée par le microprocesseur MP.

Grâce à cette disposition, il devient possible d'obtenir le spectre de la lumière transmise au travers de l'échantillon ou diffusée par celui-ci et de déterminer en outre la fluorescence de l'échantillon (qui présente un pic dont la longueur d'onde est décalée par rapport à celle de la lumière incidente).

Sur la figure 2, on a représenté un diagramme d'intensité lumineuse en fonction de la longueur d'onde faisant apparaître un décalage d'environ 50 nm entre un faisceau de lumière incident provenant de la tête 3 et transmis au travers de l'échantillon (pic P₁) et la lumière émise par fluorescence (pic P₂).

L'invention ne se limite pas à un tel détecteur spectrophotométrique pour mesurer la fluorescence.

En effet, il est possible d'effectuer un grand nombre de mesures en utilisant des combinaisons appropriées de filtres associées aux sources lumineuses SL₁ à SL₄ et aux détecteurs DO₁, DO₂.

Ainsi, pour effectuer une mesure de fluorescence, il sera possible d'associer à l'une des sources SL₁, SL₂, SL₄ par exemple à la source SL₄, un filtre passe-bas F₄ qui accentue la lumière verte mais ne laisse pas passer la lumière bleue, et de prévoir un détecteur, par exemple le détecteur DO₂ équipé d'un filtre de type passe-haut qui laisse passer la lumière bleue engendrée par la fluorescence.

Le diagramme illustré sur la figure 3 (intensité lumineuse I fonction de la longueur d'onde nm montre schématiquement :
- la réponse R₁ de la diode électroluminescente de la source SL₄ à une impulsion électrique,
- la courbe du filtre passe-bas PB associé à la diode électroluminescente,
- la lumière transmise au détecteur DO₂ après passage au travers de l'échantillon, la fréquence de cette lumière étant décalée vers le bleu du fait de la fluorescence (courbe R₂),
- la courbe du filtre passe-haut PH associée au détecteur DO₂ qui laisse passer la lumière bleue engendrée par fluorescence.

Le détecteur DO₁ pourra alors consister en une simple photodiode servant à effectuer les mesures turbidimétriques et néphélométriques.

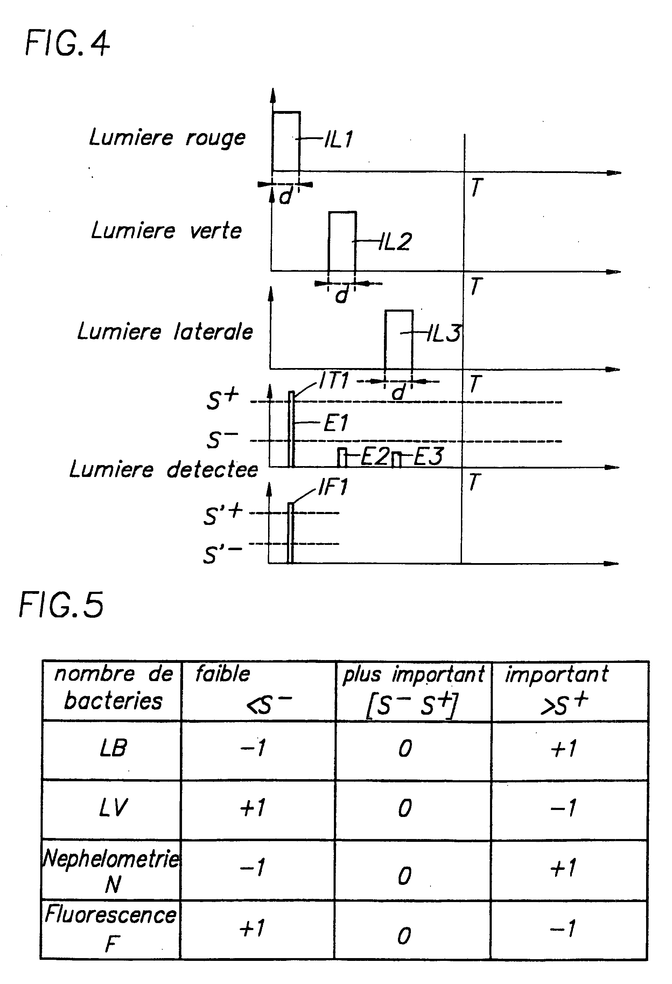

Comme précédemment mentionné, le microprocesseur MP commande une succession de séquences de mesure comprenant chacune, à l'intérieur d'une période de mesure très courte T, par exemple de l'ordre de 10 ms, trois impulsions lumineuses de faible durée d, de l'ordre de 2 ms, la première impulsion IL₁ étant engendrée par la source SL₁, la deuxième impulsion IL₂ étant engendrée par la source SL₂, tandis que la troisième impulsion lumineuse IL₃ est engendrée par la source SL₃ (figure 4).

Au cours de ces trois impulsions lumineuses, sous la commande du microprocesseur MP, le détecteur DO prélève trois échantillons de mesure respectifs, à savoir :
- un premier échantillon E₁ à partir duquel sont déterminées :
   - l'intensité IT₁ de lumière rouge transmise, en provenant de la source SL₁ (longueur d'onde 590 nm),
   - l'intensité IF₁ de lumière émise par fluorescence, dont la longueur d'onde se trouve décalée par rapport à la lumière incidente, par exemple d'une valeur de 50 nm,
- un deuxième échantillon E₂ à partir duquel sont déterminées :
   - l'intensité lumineuse transmise IT en provenance de la source SL₂ pour une longueur d'onde de 540 nm et, éventuellement,
   - l'intensité de lumière émise par fluorescence,
- un troisième échantillon E₃ permettant de déterminer l'intensité lumineuse diffusée à la suite de l'éclairement par la source SL₃ (mesure néphélométrique).

Ces différentes mesures permettent de déterminer d'une façon relativement précise et sans risque de faux négatif les variations de propriétés optiques et, en particulier, le virage de l'échantillon par exemple sous l'effet des sécrétions enzymatiques des bactéries sur un substrat chromogène, étant entendu que :
- lorsque le nombre de bactéries est faible, on obtient un signal fluorescent important ;
- lorsque le nombre de bactéries s'élève, la fluorescence diminue, tandis que l'échantillon demeure transparent ;
- en présence d'un nombre important de bactéries, l'échantillon devient opaque et diffuse le rayonnement lumineux incident; ce signal néphélométrique devient prépondérant ;
- les intensités détectées des lumières émises par les deux sources SL₁, SL₂ varient à l'inverse l'une de l'autre en fonction de la couleur de l'échantillon et donc de l'importance de la population bactérienne.

La figure 5 montre un exemple de table de vérité simplifiée prenant en compte trois états logiques des valeurs mesurées, à savoir : l'état -1 qui correspond à des valeurs mesurées inférieures à une valeur de seuil inférieur S-, un état 0 qui correspond à des valeurs mesurées comprises entre le seuil inférieur S- et un seuil supérieur S+, et l'état +1 qui correspond à des valeurs mesurées supérieures au seuil supérieur S+.

Il est clair qu'en choisissant convenablement les seuils S+ et S-, la détection du virage de l'échantillon sera obtenue par la détection de passage simultané à 0 des valeurs des paramètres LB, LV, N et F.

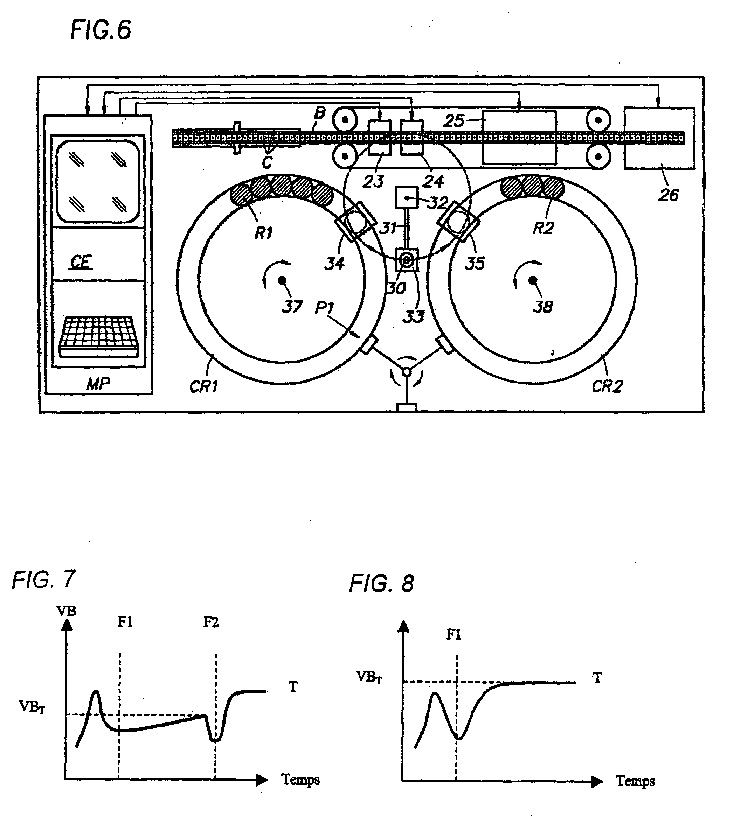

Avantageusement, un dispositif analogue à celui précédemment décrit pourra équiper un appareil d'analyse hémostatique automatique du type de celui décrit dans la demande de brevet FR No 98 07484, déposée le 10 juin 1998, au nom de la Demanderesse, et dont une représentation schématique est indiquée sur la figure 6.

Cet appareil fait intervenir une pluralité de cuvettes C transparentes destinées à contenir chacune un échantillon liquide à analyser. Ces cuvettes C sont fixées sur une bande support B défilant successivement dans un poste d'incision 23 de la bande B, un poste de pipetage 24, un poste de détection 25 équipé d'un dispositif du type de celui représenté sur la figure 1, et un poste 26 de récupération de la bande B munie de ses cuvettes C usagées.

Le poste de pipetage 24 est desservi par une pipette verticale 30 mobile en hauteur. Cette pipette 30 est fixée à l'une des extrémités d'un bras 31 monté rotatif autour d'un axe vertical 32 de manière à pouvoir être amené par rotation, successivement à l'aire de pipetage 24 à une aire de rinçage 33 et à deux aires de prélèvement 34, 35.

Les aires de prélèvement 34, 35 sont situées dans le trajet de récipients R₁, R₂ portés par deux carrousels respectifs CR₁, CR₂ mobiles en rotation autour de deux axes verticaux 37, 38 commandés par deux servomoteurs, l'un des carrousels CR₁ étant destiné à contenir les récipients R₁ d'échantillons, tandis que l'autre CR₂ contient des récipients R₂ affectés aux réactifs utilisables dans le cadre des analyses que l'on veut effectuer.

Le processeur P commande des séquences de pipetage comportant successivement :
- un rinçage préalable de la pipette 30,
- le prélèvement d'une dose d'échantillon contenu dans l'un des récipients R₁ du carrousel CR₁,
- l'injection de cette dose dans une cuvette C située dans le poste de pipetage 24,
- le rinçage de la pipette 30,
- le prélèvement d'une dose de réactif contenu dans l'un des récipients R₂ du carrousel CR₂,
- l'injection de cette dose de réactif dans la cuvette C,
- le déclenchement d'au moins une séquence de mesures telle que celle précédemment décrite, en vue d'effectuer la détection d'un virage et/ou une évaluation quantitative d'un ou plusieurs constituants de l'échantillon.

Une étude préliminaire de faisabilité a permis de montrer que le dispositif selon l'invention procurait d'excellents résultats pour le dépistage rapide des bactéries urinaires pour éliminer une infection urinaire et la détection des mycobactéries dans les prélèvements biologiques.

Les essais effectués au cours de cette étude ont porté sur des échantillons contenus dans deux types différents de tubes contenant un même substrat et conçus pour assurer une concentration des microorganismes de l'échantillon à tester dans une zone de révélation, de dimensions réduites constituées par un capillaire, à savoir :
- des tubes de type SCREEN GEL® mycobact comprenant un capillaire dans lequel les mycobactéries se concentrent après agitation, par sédimentation avec le gel,
- des tubes de type SCREEN GEL® Uri comprenant un capillaire contenant une phase gel de révélation dans laquelle les microorganismes pénètrent par centrifugation.

### A) Principe

1) Pour le tube SCREEN GEL® mycobact, l'influence du gel sur la lecture effectuée par le dispositif selon l'invention a été étudiée grâce à une série d'essais en système purifié mettant en oeuvre des tubes contenant 0,5 ml d'un milieu de culture avec du gel.
   La fluorescence a été lue à l'aide d'un appareil de présérie conforme à l'invention, utilisé comme appareil de référence et couplé à un microprocesseur programmé de manière à pouvoir visualiser sur un écran les courbes de résultat.
   Ces essais ont montré que la lecture du changement de couleur était plus facile et plus précoce en présence de gel.
   La fluorescence F a été lue parallèlement au changement de couleur et on a constaté que l'augmentation de fluorescence (ΔF) calculée par le rapport de fluorescence lue au moment du changement de couleur par rapport à la fluorescence de départ (R=Ftx/Ft0 ) est plus élevée et plus précoce en présence de gel (mΔF > 3,8) qu'en absence de gel (mΔF >2,9) quelle que soit l'inoculum (10⁶ et 10⁴ UFC/ml).
2) Pour le tube SCREEN GEL® Uri, la concentration des bactéries est assurée par centrifugation dans la partie capillaire du tube contenant la phase gel.

### B) Fenêtres de lecture

La détermination des fenêtres de lecture des deux types de tubes a résulté d'une centaine de mesures de fluorescence, de néphélémétrie et de turbidimétrie effectuées en partant du fond du tube vers le haut du capillaire.

Pour le tube SCREEN GEL® Uri, les fenêtres de lecture sont délimitées par la turbidimétrie : comme ceci apparaît sur la figure 7, le fond du tube est représenté par le premier pic de turbidimétrie ; le haut du capillaire est représenté par la décroissance de turbidimétrie en présence de déchets ou par la décroissance de fluorescence pour l'interface gel échantillon sans déchets.

Pour le tube SCREEN GEL® mycobact (fig. 8), il n'y a pas de fenêtre de fin de lecture car il n'y a pas d'interface gel échantillon. Les valeurs de fluorescence et de néphélémétrie lues sont donc maximales quelle que soit leur localisation.

Sur les figures 7 et 8,
VB désigne des valeurs brutes,
T désigne des valeurs turbidimétriques,
VBT désigne des valeurs brutes de turbidimétrie lues dans la fenêtre de lecture
F1 désigne la fenêtre de début de lecture,
F2 désigne la fenêtre de fin de lecture.

### C) Etude en système purifié

Une étude en système purifié à porté sur l'évolution des paramètres de l'appareil de lecture en présence de mycobactéries.
1) On constate que la turbidimétrie n'évolue pas en fonction de la croissance des mycobactéries, quels que soient l'inoculum et la concentration en substrat.
2) L'augmentation de la néphélémétrie est quant à elle liée :
   - à la rapidité de croissance de la souche : la variation de néphélémétrie est tardive quelles que soient les souches,
   - à la taille de l'inoculum : la variation de néphélémétrie est d'autant plus tardive que l'inoculum est faible. Il y a eu retard de quatre jours pour la souche *M.kansasii* à 10⁶ UFC/ml et de 8 jours pour cette souche 10⁴ UFC/ml. Il en est de même pour la souche *M.tuberculosis* (retard de 6 et 9 jours respectivement),
   - à la concentration du substrat : la variation de N est d'autant plus faible et plus tardive que la concentration en substrat diminue.

   Pour la souche *M.avium*, elle apparaît en 5 jours pour une concentration de substrat de 22,7 mg/l et en 11 jours pour une concentration de 11,35 mg/l.
   Il apparaît donc que l'augmentation de néphélémétrie, témoin de la multiplication bactérienne, est tardive. Ce paramètre présente donc peu d'intérêt en système purifié.
3) En ce qui concerne la fluorescence, l'augmentation de fluorescence ΔF dépend :
   - de la vitesse de croissance de la souche : elle est proportionnelle au à la croissance,
   - de l'inoculum : elle est d'autant plus précoce et plus intense que l'inoculum est important,
   - de la concentration en substrat : elle est plus précoce lorsque que la concentration en substrat diminue pour la souche de *M.tuberculosis*, de CMI faible (CMI 20 mg/l) et pour la souche de *M.kansasii* dont la croissance est ralentie par le substrat. La concentration optimale de substrat est de 11 mg/l,
   - de la stabilité à 37°C des tubes témoins: l'augmentation de F (ΔF) des tubes témoins est progressive. L'augmentation de fluorescence des tubes à essais doit être supérieure à celles des tubes témoins incubés dans les mêmes conditions pour que le test soit positif. Pour simplifier la lecture, nous préférons calculer le ratio fluorescence F (essai)/ fluorescence (témoin) plutôt que calculer l'augmentation de fluorescence par rapport à to pour les tubes à essais et pour les tubes témoins.

Le test est positif lorsque que le ratio est > 1,55. Il est limite lorsque le ratio est compris entre 1,4 et 1,55 ; dans ce cas, il est nécessaire d'incuber davantage.

La détermination de la fluorescence est sensible (ratio de 1,5 à 3,0) et précoce voire plus précoce que la fluorescence du tube MGIT, surtout pour les souches de croissance lente : *M.xenopi* et *M.tuberculosis*.

La détermination de la fluorescence permet donc une détection précoce et sensible de l'activité respiratoire des mycobactéries. La lecture sur l'appareil permet de diminuer la concentration en substrat qui inhibe surtout la croissance des souches de *M.tuberculosis*.

### D) Une étude en système de prélèvements surchargés a permis de déterminer l'évolution des paramètres de l'appareil de lecture en l'absence de mycobactéries et en présence de mycobactéries.

En l'absence de mycobactérie, on a fait les constations suivantes :
- la stabilité du substrat à 45°C et à 37°C est similaire en système de prélèvements (n=3) et en système purifié,
- la fluorescence augmente progressivement et de la même façon qu'en système purifié. Le ratio F de tubes témoins prélèvements par rapport à un tube témoin tampon est < 1,3,
- la néphélémétrie reflète la présence de déchets dans les prélèvements.
- En présence de mycobactéries, le ratio de fluorescence des prélèvements surchargés a été déterminé en tubes contenant environ 11 mg/l de substrat et en prenant comme référence un tube témoin en tampon, et le même seuil que précédemment. On constate que les délais de détection moyens sont plus courts qu'en tampon. Néanmoins, il semble que la présence de déchets en grande quantité retarde ou marque l'apparition de la couleur rose et de la fluorescence, surtout pour les souches de *M.tuberculosis*.

La détermination de la fluorescence par l'appareil permet donc la détection des mycobactéries en prélèvements surchargés dans des délais similaires. Les autres paramètres ne présentent pas d'intérêt.

### E) Conclusion

En conclusion, l'appareil selon l'invention est utilisable pour la lecture de tubes SCREEN GEL® mycobact :
- en utilisant les tubes sans centrifugation,
- en réduisant la concentration de substrat, révélateur de la fluorescence. La concentration initialement sélectionnée pour visualiser correctement un changement de couleur inhibe ou retarde la croissance des souches de *M. tuberculosis* en particulier.

Toutefois, en simplifiant le mode de détection :
- il n'est pas nécessaire de délimiter de fenêtres de lecture,
- la fluorescence est le seul paramètre présentant un intérêt comme marqueur de l'activité des mycobactéries,
- la valeur brute de fluorescence indiquée est la valeur maximale lue pendant le trajet parcouru dans le capillaire ; elle est indépendante de sa localisation dans le capillaire,
- la détection de la fluorescence est suffisante : il n'y a pas d'extinction de F liée à l'apparition du dérivé incolore non fluorescent car la lecture cinétique tous les jours puis toutes les semaines s'arrête dès la génération du dérivé rose fluorescent,
- la lecture est effectuée en prenant comme référence un tube témoin en tampon, incubé dans les mêmes conditions que les tubes à tester. L'interprétation du rapport de fluorescence des tubes à tester sur F du tube témoin permet de pallier à l'évolution de fluorescence pendant les deux mois d'incubation à 37°C donc à l'instabilité du substrat à cette température,
- la mesure de fluorescence sur l'appareil permet une détermination quantitative et précoce du changement de couleur et rend le résultat indépendant de l'opérateur,
- le réglage de l'appareil est limité à la fibre de fluorescence ; l'étalonnage à l'utilisation de contrôles positif et le contrôle à l'utilisation des tubes SCREEN GEL® mycobact.

## Revendications

1. Procédé pour la détection d'une variation des propriétés optiques d'un échantillon à analyser, ce procédé consistant à exécuter, au cours d'une période de temps relativement courte, de l'ordre de la milliseconde à la dizaine de millisecondes, une séquence opératoire comprenant au moins les étapes suivantes :
- une première exposition de l'échantillon à une première impulsion lumineuse incidente (IL₁) dont les ondes lumineuses sont comprises dans une première gamme de fréquence, cette impulsion (IL₁) étant émise par une première source lumineuse optoélectronique (SL₁),
- une première mesure de type turbidimétrique, par un détecteur optoélectronique (DO) situé sensiblement dans l'axe de ladite première impulsion incidente (IL₁) de l'intensité lumineuse transmise de ladite première impulsion, après son passage au travers dudit échantillon,
- le stockage du résultat de cette première mesure dans une mémoire (MEM),
- une deuxième exposition de l'échantillon à une seconde impulsion lumineuse incidente (IL₂) présentant sensiblement la même incidence que la première, dont les ondes lumineuses sont comprises dans une deuxième gamme de fréquence, cette impulsion (IL₂) étant émise par une seconde source lumineuse optoélectronique (SL₂),
- une deuxième mesure de type turbidimétrique de l'intensité transmise de ladite deuxième impulsion par ledit détecteur (DO) après son passage au travers dudit échantillon,
- le stockage des résultats de cette deuxième mesure dans ladite mémoire (MEM),
**caractérisé en ce qu'**il comprend en outre dans ladite période de temps
- une troisième exposition de l'échantillon à une troisième impulsion lumineuse (IL₃) orientée perpendiculairement aux deux autres impulsions
- une troisième mesure de type néphélométrique de l'intensité lumineuse du rayonnement émis par l'échantillon en réponse à cette troisième impulsion, à l'aide dudit détecteur (DO),
- le stockage en mémoire des résultats de cette troisième mesure dans ladite mémoire, et
une analyse des résultats stockés dans ladite mémoire étant effectuée pendant ou après ladite période de temps.

2. Procédé selon la revendication 1,
**caractérisé en ce qu'**il comprend une succession de séquences opératoires et une analyse comparative des résultats de ces séquences.

3. Procédé selon l'une des revendications 1 et 2,
**caractérisé en ce que** la durée des susdites impulsions lumineuses (IL₁, IL₂, IL₃) est de l'ordre d'un dixième de milliseconde à quelques millisecondes.

4. Procédé selon l'une des revendications précédentes,
**caractérisé en ce qu'**il comprend en outre, au cours de l'une des deux premières mesures, une détermination de la fluorescence de l'échantillon.

5. Procédé selon l'une des revendications précédentes,
**caractérisé en ce que** les susdites mesures sont effectuées à l'aide de plusieurs détecteurs dont l'un est spécifiquement utilisé pour la détermination de la fluorescence.

6. Procédé selon la revendication 5,
**caractérisé en ce que** la mesure de la fluorescence est obtenue par la conjugaison du filtrage de l'une des susdites impulsions de lumière incidente par un filtre passe-bas qui accentue la lumière verte mais ne laisse pas passer la lumière bleue et d'un filtrage de la lumière transmise en réponse à ladite impulsion par un filtre passe-haut qui laisse passer la lumière bleue engendrée par la fluorescence.

7. Procédé selon la revendication 6,
**caractérisé en ce que** les susdites mesures sont de type spectrophotométrique.

8. Procédé selon l'une des revendications précédentes,
**caractérisé en ce que** l'analyse des résultats s'effectue grâce à une table de vérité préalablement mémorisée.

9. Dispositif pour la détection d'une variation des propriétés optiques d'un échantillon à analyser, comprenant:
- une source lumineuse (SL₁) émettant dans une première gamme de longueur d'onde, un faisceau lumineux appliqué par l'intermédiaire d'un premier guide optique (4), à une première tête d'émission (3) axée sur un récipient transparent (2) contenant un échantillon (1) à analyser,
- une deuxième source lumineuse (SL₂) émettant dans une deuxième gamme de longueur d'onde, un faisceau lumineux appliqué à ladite première tête d'émission (3),
- au moins un détecteur optoélectronique (DO) placé dans l'axe de la première tête (3) en un emplacement situé du côté du récipient situé à l'opposé de ladite première tête (3),
characterisé en ce qu'il comprend en outre:
- une troisième source lumineuse (SL₃) reliée par l'intermédiaire d'un troisième guide optique (6) à une deuxième tête d'émission (7) axée sur le récipient transparent (2), perpendiculairement à l'axe de la susdite première tête (3), cette troisième source lumineuse (SL₃) servant à effectuer une mesure néphélométrique et étant pilotée par un microprocesseur (MP),
- ledit microprocesseur (MP) pilotant lesdites sources lumineuses (SL₁, SL₂, SL₃) et ledit détecteur (DO), de manière à commander une séquence de mesure comprenant, à l'intérieur d'une période de mesure très courte, de l'orde de 1 ms à 10 ms, trois impulsions lumineuses successives de faible durée d, de l'orde de 2 ms, engendrées respectivement par les trois sources (SL₁, SL₂, SL₃), ce microprocesseur (MP) étant programmé pour effectuer une analyse des résultats des mesures effectuées par le détecteur.

10. Dispositif selon la revendication 9,
**caractérisé en ce que** les sources lumineuses (SL₁, SL₂, SL₃) comprennent chacune une diode électroluminescente (D₁, D₂) et un filtre optique (F₁, F₂, F₃).

11. Dispositif selon l'une des revendications 9 et 10,
**caractérisé en ce que** le susdit détecteur (DO) est de type spectrophotométrique.

12. Dispositif selon l'une des revendications 9 à 11,
**caractérisé en ce qu'**il est intégré au poste de mesure d'un appareil d'analyse automatique faisant intervenir une pluralité de cuvettes transparentes (C) destinées à contenir chacune un échantillon liquide à analyser, ces cuvettes (C) étant fixées sur une bande support (B) défilant successivement dans un poste d'incision (23) de la bande (B), un poste de pipetage (24), ledit poste de mesure et un poste de récupération de la bande (B) munie de ses cuvettes usagées.

## Patentansprüche

1. Verfahren zur Erfassung einer Veränderung der optischen Eigenschaften einer zu analysierenden Probe, wobei dieses Verfahren darin besteht, während einer relativ kurzen Zeitspanne von ungefähr einer Millisekunde bis zu zehn Millisekunden eine Verfahrenssequenz auszuführen, die zumindest die folgenden Schritte umfasst:
- erstes Aussetzen der Probe einem ersten eintreffenden Lichtimpuls (IL₁), dessen Lichtwellen in einem ersten Frequenzbereich enthalten sind, wobei dieser Impuls (IL₁) von einer ersten optoelektronischen Lichtquelle (SL₁) ausgesendet wird,
- erste turbidimetrische Messung durch einen optoelektronischen Detektor (DO), der im Wesentlichen in der Achse des ersten eintreffenden Impulses (IL₁) der von dem ersten Impuls übertragenen Lichtstärke nach seinem Durchgang durch die Probe angeordnet ist,
- Speicherung des Ergebnisses dieser ersten Messung in einem Speicher (MEM),
- zweites Aussetzen der Probe einem zweiten eintreffenden Lichtimpuls (IL₂), der im Wesentlichen den gleichen Einfall wie der erste aufweist, dessen Lichtwellen in einem zweiten Frequenzbereich enthalten sind, wobei dieser Impuls (IL₂) von einer zweiten optoelektronischen Lichtquelle (SL₂) ausgesendet wird,
- zweite turbidimetrische Messung der von dem zweiten Impuls übertragenen Lichtstärke nach Durchlaufen des Detektors (DO) durch die Probe,
- Speicherung der Ergebnisse dieser zweiten Messung in dem Speicher (MEM),
**dadurch gekennzeichnet, dass** es ferner in der Zeitspanne ein drittes Aussetzen der Probe einem dritten Lichtimpuls (IL₃), der senkrecht auf die beiden anderen Impulse ausgerichtet ist, und eine dritte nephelometrische Messung der Lichtstärke der von der Probe ausgesendeten Strahlung als Antwort auf diesen dritten Impuls mit Hilfe des Detektors (DO), und
- die Speicherung der Ergebnisse dieser dritten Messung in dem Speicher umfasst, und
eine Analyse der in dem Speicher gespeicherten Ergebnisse während oder nach der Zeitspanne durchgeführt wird.

2. Verfahren nach Anspruch 1, **dadurch gekennzeichnet, dass** es eine Aufeinanderfolge von Verfahrenssequenzen und eine vergleichende Analyse der Ergebnisse dieser Sequenzen umfasst.

3. Verfahren nach Anspruch 1 oder 2, **dadurch gekennzeichnet, dass** die Dauer der oben erwähnten Lichtimpulse (IL₁, IL₂, IL₃) ungefähr ein zehntel Millisekunde bis einige Millisekunden beträgt.

4. Verfahren nach einem der vorhergehenden Ansprüche, **dadurch gekennzeichnet, dass** es ferner während einer der beiden ersten Messungen eine Bestimmung der Fluoreszenz der Probe umfasst.

5. Verfahren nach einem der vorhergehenden Ansprüche, **dadurch gekennzeichnet, dass** die oben erwähnten Messungen mit Hilfe mehrerer Detektoren erfolgen, von denen einer spezifisch für die Bestimmung der Fluoreszenz verwendet wird.

6. Verfahren nach Anspruch 5, **dadurch gekennzeichnet, dass** die Messung der Fluoreszenz durch Konjugation der Filterung einer der oben erwähnten Impulse des eintreffenden Lichts durch einen Tiefpassfilter, der das grüne Licht verstärkt, aber das blaue Licht nicht durchlässt, und einer Filterung des übertragenen Lichts als Antwort auf den Impuls durch einen Hochpassfilter, der das blaue Licht, das durch die Fluoreszenz erzeugt wird, durchlässt, erzielt wird.

7. Verfahren nach Anspruch 6, **dadurch gekennzeichnet, dass** die oben erwähnten Messungen spektrophotometrischen Typs sind.

8. Verfahren nach einem der vorhergehenden Ansprüche, **dadurch gekennzeichnet, dass** die Analyse der Ergebnisse mit Hilfe einer vorher gespeicherten Wahrheitstabelle erfolgt.

9. Vorrichtung zur Erfassung einer Änderung der optischen Eigenschaften einer zu analysierenden Probe, umfassend:
- eine Lichtquelle (SL₁), die in einem ersten Wellenlängenbereich einen Lichtstrahl aussendet, der über einen ersten optischen Leiter (4) an einen ersten Sendekopf (3) angelegt wird, der auf einem transparenten Behälter (2), der eine zu analysierende Probe (1) enthält, ausgerichtet ist,
- eine zweite Lichtquelle (SL₂), die in einem zweiten Wellenlängenbereich einen Lichtstrahl aussendet, der an den ersten Sendekopf (3) angelegt wird,
- mindestens einen optoelektronischen Detektor (DO), der in der Achse des ersten Kopfes (3) an einer Stelle angeordnet ist, die sich auf der Seite des Behälters befindet, der gegenüber dem ersten Kopf (3) angeordnet ist,
**dadurch gekennzeichnet, dass** sie ferner umfasst:
- eine dritte Lichtquelle (SL₃), die durch einen dritten optischen Leiter (6) mit einem zweiten Sendekopf (7) verbunden ist, der auf dem transparenten Behälter (2) senkrecht zur Achse des oben erwähnten ersten Kopfes (3) ausgerichtet ist, wobei diese dritte Lichtquelle (SL₃) dazu dient, eine nephelometrische Messung durchzuführen, und von einem Mikroprozessor (MP) gesteuert wird,
- wobei der Mikroprozessor (MP) die Lichtquellen (SL₁, SL₂, SL₃) und den Detektor (DO) steuert, um eine Messsequenz zu steuern, die innerhalb eines sehr kurzen Messzeitraumes von ungefähr 1 ms bis 10 ms drei aufeinanderfolgende Lichtimpulse von kurzer Dauer d von ungefähr 2 ms umfasst, die jeweils von den drei Quellen (SL₁, Sl₂, Sl₃) erzeugt werden, wobei dieser Mikroprozessor (MP) derart programmiert ist, dass er eine Analyse der von dem Detektor durchgeführten Messergebnisse durchführt.

10. Vorrichtung nach Anspruch 9, **dadurch gekennzeichnet, dass** die Lichtquellen (SL₁, SL₂, SL₃) jeweils eine Lumineszenzdiode (D₁, D₂) und einen optischen Filter (F₁, F₂, F₃) umfassen.

11. Vorrichtung nach einem der Ansprüche 9 und 10, **dadurch gekennzeichnet, dass** der Detektor (DO) spektrophotometrischen Typs ist.

12. Vorrichtung nach einem der Ansprüche 9 bis 11, **dadurch gekennzeichnet, dass** sie in die Messstation eines automatischen Analysegeräts integriert ist, das eine Vielzahl von transparenten Gefäßen (C) einsetzt, die dazu bestimmt sind, jeweils eine zu analysierende flüssige Probe zu enthalten, wobei diese Gefäße (C) auf einem Trageband (B) befestigt sind, das nacheinander durch eine Station (23) für den Einschnitt des Bandes (B), eine Pipettierstation (24), die Messstation und eine Station zur Wiedergewinnung des mit seinen benutzten Gefäßen versehenen Bandes (B) läuft.

## Claims

1. Method for detecting the optical properties variation of a sample to be analysed, said method consisting of executing during a relatively short period of time of between about one millisecond and about ten milliseconds an operational sequence comprising at least the following stages:
- a first exposure of the sample to a first incident light pulse (IL₁) whose light waves are comprised in a first frequency range, this pulse (IL₁) being transmitted by a first opto-electronic light source (SL₁),
- a first turbidimetrical measurement by an opto-electronic detector (DO) situated approximately in the axis of said first incident light pulse (IL₁) of the light intensity transmitted by said first pulse after it has passed through said sample,
- the storage of the result of this first measurement in a memory (MEM),
- a second exposure of the sample to a second incident light pulse (IL₂) having approximately the same incidence as the first one whose light waves are comprised in a second frequency range, this pulse (IL₂) being emitted by a second opto-electronic light source (SL₂),
- a second turbidimetrical measurement of the intensity transmitted from said second pulse by said detector (DO) after it has passed through said sample,
- the storage of the results of this second measurement in said memory (MEM),
**characterised in that** it further comprises in said time period
- a third exposure of the sample to a third light pulse (IL₃) oriented perpendicular to the two other pulses,
- a third nephelometrical measurement of the light intensity of the radiation emitted by the sample in response to this third pulse with the aid of said detector (DO),
- the storage of the results of this third measurement in said memory, and
an analysis of the results stored in said memory being carried out during or after said time period.

2. Method according to claim 1, **characterised in that** it comprises a succession of operational sequences and a comparative analysis of the results of these sequences.

3. Method according to claim 1 or 2, **characterised in that** the duration of said light pulses (IL₁, IL₂, IL₃) is about one tenth of a millisecond to several milliseconds.

4. Method according to one of the preceding claims, **characterised in that** it further comprises during one of the first two measurements a determination of the fluorescence of the sample.

5. Method according to one of the preceding claims, **characterised in that** said measurements are carried out with the aid of several detectors, one of the latter being specifically used to determine fluorescence.

6. Method according to claim 5, **characterised in that** the measurement of fluorescence is obtained by the conjugation of the filtering of one of said incident light pulses by means of a lowpass filter which accentuates the green light but does not allow the blue light to pass, and a filtering of the light transmitted in response to said pulse by a highpass filter which allows the blue light generated by the fluorescence to pass.

7. Method according to claim 6, **characterised in that** said measurements are spectrophotometrical measurements.

8. Method according to one of the preceding claims, **characterised in that** the analysis of the results is carried out by using a previously stored truth table.

9. Device for detecting a variation of the optical properties of a sample to be analysed, comprising
- a light source (SL₁) emitting in a first wavelength range, a luminous beam applied by means of a first optical guide (4) to a first emission head (3) axed on a transparent receptacle (2) containing a sample (1) to be analysed,
- a second light source (SL₂) emitting in a second wavelength range, a luminous beam applied to said first emission head (3),
- at least one opto-electronic detector (DO) placed in the axis of the first head (3) at a location situated on the side of the receptacle situated opposite said first head (3), **characterised in that** it further comprises :
- a third light source (SL₃) connected by means of a third optical guide (6) to a second emission head (7) axed on the transparent receptacle (2) perpendicular to the axis of said first head (3), this third light source (SL₃) being used to carry out a nephelometrical measurement and being controlled by a microprocessor (MP),
- said microprocessor (MP) controlling said light sources (SL₁, SL₂ and SL₃) and said detector (DO) so as to order a measuring sequence comprising inside an extremely short period of between about 1 and 10 ms, three successive light pulses of short duration d of about 2 ms respectively generated by the three sources (SL₁, SL₂, SL₃), this microprocessor (MP) being programmed so as to carry out an analysis of the results of the measurements carried out by the detector.

10. Device according to claim 9, **characterised in that** the light sources (SL₁, SL₂, SL₃) each comprising one electroluminescent diode (D₁, D₂) and an optical filter (F₁, F₂, F₃).

11. Device according to claim 9 or 10, **characterised in that** said detector (DO) is a spectrophotometrical detector.

12. Device according to one of claims 9 to 11, **characterised in that** it is integrated in the measuring station of an automatic analysis device introducing a plurality of transparent bowls (C) intended to each contain one liquid sample to be analysed, these bowls (C) being secured to a support strip (B) successively reeling off in an incision station (23) of the strip (B), a pipetting station (24), said measuring station and a recovery station of the strip (B) fitted with its used bowls.
